# EUROPÄISCHE PATENTSCHRIFT

(11) **EP 2 830 822 B1**
(45) Veröffentlichungstag und Bekanntmachung des Hinweises auf die Patenterteilung: **25.05.2016**
(21) Anmeldenummer: 13716195.6
(22) Anmeldetag: 20.03.2013
(51) Int. Cl.: B23K 35/28, B23K 35/02, C22C 21/02, C22C 21/04

(54) **LOTPULVER**
SOLDER POWDER
POUDRE DE SOUDURE

(30) Priorität: 26.03.2012 DE 102012006121; 26.03.2012 DE 202012003090 U
(43) Veröffentlichungstag der Anmeldung: 04.02.2015
(73) Patentinhaber: Erbslöh Aluminium GmbH, 42553 Velbert (DE)
(72) Erfinder: SUCKE, Norbert William, 47269 Duisburg (DE); LÖCHTE, Lothar, 40723 Hilden (DE); GRZESIK, Martin, 44137 Dortmund (DE)
(74) Vertreter: Buse, Mentzel, Ludewig Patentanwaltskanzlei
(86) Internationale Anmeldenummer: PCT/EP2013/000843
(87) Internationale Veröffentlichungsnummer: WO 2013/143665

(56) Entgegenhaltungen:
- EP-A1- 2 479 296
- DE-A1- 2 439 668
- DE-A1- 19 733 204
- K. MATSUURA ET AL: "Precipitation of Si particles in a super-rapidly solidified Al-Si hypereutectic alloy", MATERIALS CHEMISTRY AND PHYSICS, Bd. 81, Nr. 2-3, 1. August 2003 (2003-08-01), Seiten 393-395, XP055074763, ISSN: 0254-0584, DOI: 10.1016/S0254-0584(03)00030-0

## Beschreibung

Die Erfindung betrifft ein Lotpulver zum Verbinden von Bauteilen aus Aluminium oder Aluminiumlegierungen durch Hartlöten, insbesondere ein Hartlotpulver zum Verbinden von Wärmetauscher-Bauteilen.

Bauteile für Wärmetauscher, insbesondere zur Verwendung in Kraftfahrzeugen werden vorzugsweise aus Aluminium oder einer Aluminiumlegierung hergestellt, da solche Wärmetauscher ein vergleichsweise geringes Gewicht besitzen und das Aluminiummaterial eine hohe Korrosionsbeständigkeit aufweist. Bekannte Wärmetauscher sind aus stranggepressten Flachrohrprofilen aufgebaut, welche parallel zueinander angeordnet sind und an ihren beiden Enden an je einem Sammelrohr angeschlossen sind. Hierbei ist zwischen benachbarten Seiten zweier Flachrohrprofile an diesen jeweils eine Lamelle befestigt, siehe EP 1 179 167 B1. Die Verbindung zwischen den Profilrohren und den Lamellen sowie zwischen den Profilrohren und den Sammelrohren erfolgt durch eine Hartlötverbindung. Für den Hartlötvorgang ist ein Lot notwendig, welches die stoffschlüssige Verbindung zwischen den beiden Aluminium-Grundwerkstoffen der zu verbindenden Aluminiumbauteile herstellt sowie ein Flussmittel, welches zur Entfernung der auf den Aluminiumbauteilen befindlichen Oxidhaut dient. Zumindest ein Verbindungspartner wird vor dem Lötvorgang mit dem Lot und Flussmittel beschichtet. Abhängig von der Beschichtungsvariante wird eine Mischung aus Lot, Flussmittel und Bindermittel auf die Oberfläche eines der zu verlötenden Aluminiumbauteile aufgetragen, siehe Anspruch 9 bzw. 10 von DE 197 44 734 A1 sowie Anspruch 22 von DE 198 59 735 A1. Die Auswahl an geeigneten Hartloten für die Verbindung der Wärmetauscher-Bauteile ist beschränkt, da der Grundwerkstoff der Bauteile aus Aluminium oder einer Aluminiumlegierung besteht. So muss das Hartlot ein niedrigeres Schmelzintervall aufweisen als die Grundwerkstoffe der Aluminiumbauteile. Für Aluminiumbauteile werden in der Regel Aluminium oder Aluminiumlegierungen eingesetzt, die im Bereich > 600°C schmelzen. Zur Verbindung dieser Aluminiumbauteile sind Hartlote auf Aluminium-Silizium-Basis geeignet, vorzugsweise AlSi(7-13)-Legierungen mit einem Schmelzintervall von 575°C bis 615°C.

Die Verwendung solcher AlSi(7-13)-Legierungslote ist beispielsweise in dem Dokument EP 292 565 B1 offenbart. Bei den dort beschriebenen Wärmetauschern werden die eingesetzten Lamellen aus einer 3003-Aluminiumlegierung hergestellt, die mit einer 4343-Aluminiumlegierung plattiert ist, d.h. mit einer AlSi(7-8)-Lotlegierungsplattierung. Das verwendete Flachhohlprofil besteht aus einer 1050-Aluminiumlegierung. Das Hartlöten erfolgt in einem Ofen unter Inertgasatmosphäre, wobei das Lamellenmaterial an den Berührungsstellen mit dem Flachrohrprofil verbunden wird. Durch die Lotplattierung der Lamellen wird zwar eine gleichmäßige Lotbeschichtung gewährleistet. Nachteilig ist jedoch, dass die zusätzliche Plattierung eine relativ große Schichtdicke aufweist. Darüber hinaus wird durch die Plattierung mehr Lot aufgebracht als für das Hartlöten erforderlich ist, da ausschließlich an den Berührungsstellen zwischen Lamelle und Mehrkammerhohlprofil das Lot für die Hartlötverbindung benötigt wird.

Eine andere Möglichkeit zeigt das Dokument DE 197 44 734 A1. Hier wird eine AlSi(7.5)-Lotlegierung zusammen mit Flussmittelpulver und Binderpulver auf die Oberfläche der Flachrohre aufgetragen. Obwohl im Vergleich zur Lotplattierung der Lamellen bei der Beschichtung der Flachrohre insgesamt weniger AlSi-Lot eingesetzt wird, werden auch bei dieser pulverförmigen Beschichtung mit einer AlSi(7-12)-Legierung aufgrund der Gewichtsanteile an Aluminium im Lot, nämlich 88Gew% bis 93Gew%, vergleichsweise große Mengen an für die Lötverbindung nicht notwendigem Aluminium auf das Bauteil aufgetragen. Für die stoffschlüssige Verbindung sind jedoch insbesondere die Silizium-Anteile von Bedeutung.

Ein besseres Verhältnis von Aluminium zu Silizium in einer aufgetragenen Beschichtung wird im Dokument US 5 232 788 offenbart. Die Lotbeschichtung besteht aus einer wässrigen Aufschlämmung in der vorzugsweise Nocolok-Flussmittelpartikel und Siliziumpulverpartikel enthalten sind. Die Verwendung von Siliziumpulverpartikel anstatt der AlSi(7-12)-Legierungspartikel erhöht den Gewichtsanteil an Silizium für die Hartverlötung. Nachteilig ist jedoch, dass die Siliziumpulverpartikel beim Aufschmelzen des Lotes zur Herstellung der Lotverbindung in den Aluminiumgrundwerkstoff hinein diffundieren und eine Aluminium-Silizium-Legierung bilden, d.h. Grundwerkstoff konsumieren. Hierdurch verändert sich lokal die Wandstärke, was insbesondere bei dünnwandigen Mehrkammerhohlprofilen problematisch ist. Eine gewünschte Materialdickenreduzierung ist nicht mehr möglich. Darüber hinaus ist es notwendig, dass die maximale Siliziumpartikelgröße einen Wert von 30 µm nicht überschreitet, da große Siliziumpartikel in einer entsprechend dicken Binderschicht eingebunden werden müssen, was zu einer ungewünschten hohen Schichtdicke der Lotbeschichtung führen würde. Für die Einbindung der unterschiedlich großen Pulverpartikel, insbesondere der großen Pulverpartikel, ist eine relative hohe Binder-Schichtdicke notwendig. Wird das Lot-Flussmittel-Bindergemisch in einer Nassbeschichtung aufgetragen, ist darüber hinaus nachteilig, dass aufgrund der hohen Schichtdicke eine entsprechend hohe Ofenleistung zum Abdampfen des Lösungsmittels oder zur Trocknung der aufgetragenen Nassbeschichtung erforderlich ist.

Eine andere Möglichkeit, den Gewichtsanteil von Silizium in der Lotbeschichtung zu erhöhen, besteht darin, eine übereutektische Aluminium-Silizium-Legierung für das Hartlot vorzusehen, d.h. AlSi-Legierungen mit einem Gewichtsanteil an Silizium von mehr als 12%. Der Einsatz solcher übereutektischer Aluminium-Silizium-Legierungen für die Hartverlötung führte jedoch zu schlechteren Lotergebnissen als der Einsatz von eutektischen Aluminium-Silizium-Legierungen bzw. dem Einsatz von Siliziumpulver als Lot. Dies wird darauf zurückgeführt, dass die primär erstarrenden Siliziumausscheidungen in den übereutektischen Aluminium-Silizium-Legierungen zum einen unterschiedliche Korngrößen aufweisen und zum anderen nicht homogen im Aluminium-Silizium-Legierungsgefüge verteilt vorliegen. Insbesondere liegen die primär erstarrten Si-Partikel sehr grob vor, was zu einer Löterosion und somit zu einer Vorschädigung der Rohrwandung führen kann.

Darüber hinaus ist aus dem Dokument "Precipitation of Si particles in a superrapidly solidified Al-Si hypereutectic alloy" von K.MATSUURA u.a., MATERIALS CHEMISTRY AND PHYSICS, Bd. 81, Nr. 2-3 vom 1.8.2003, Seite 393-395 ein zum Sintern geeignetes Aluminium-Pulver mit 17 Gew% Silizium bekannt. Dies wurde durch schnelle Erstarrung erhalten.

Aufgabe der vorliegenden Erfindung ist es, für die Hartlötung von Aluminiumbauteilen, insbesondere von Wärmetauscher-Bauteilen ein verbessertes Lot zur Verfügung zu stellen.

Diese Aufgabe wird mit einem Lotpulver mit den Merkmalen des Anspruchs 1 gelöst. Dieses Lotpulver zum Verbinden von Bauteilen aus Aluminium oder Aluminium-Legierungen durch Hartlöten besteht aus Pulverpartikeln auf Aluminium-Silizium-Basis, wobei der Gewichtsanteil an Silizium mehr als 12 Gew% beträgt, vorzugsweise zwischen 12 Gew% und 40 Gew% Silizium, besonders bevorzugt 18 Gew% bis 36 Gew% Silizium. Durch den hohen Gewichtsanteil an Silizium in diesem Lotpulver auf Aluminium-Silizium-Basis verringert sich entsprechend der Anteil an Aluminium in diesem Lotpulver. Es wird damit weniger unnötiges Aluminium für die Lotbeschichtung verwendet, was aufgrund des hohen Aluminiumpreises vorteilhaft ist. Da die Pulverpartikel des Lotpulvers durch eine schnelle Erstarrung (rapid solidification process) erzeugt wurden, weist jedes Pulverpartikel Silizium-Primärkristallausscheidungen in einem eutektischen Aluminium-Silizium-Legierungsgefüge auf, wodurch die Silizium-Primärkristallausscheidungen gleichmäßig und fein verteilt im Lotpulver vorliegen. Damit führt die Beschichtung mit einem derartigen Lotpulver zu einer gleichmäßigen Verteilung des Siliziums auf der Oberfläche des mit Lotpulver beschichteten Bauteils und damit zu gleich guten Lötergebnissen. Anders ist dies bei Pulverbeschichtungen oder Lötplattierungen aus einer übereutektischen Aluminium-Silizium-Legierung, die in herkömmlicher Weise durch Gießen hergestellt wird und grobe Siliziumausscheidungen enthalten kann sowie darüber hinaus keine gleichmäßig Verteilung der Silizium-Ausscheidungen zeigt, so dass insbesondere die Gefahr von Löterosion besteht.

Das neue erfindungsgemäße Lotpulver wird durch schnelle Erstarrung einer übereutektischen Aluminium-Silizium-Legierungsschmelze erzielt. Beispielsweise lässt sich aus einer übereutektischen Aluminium-Silizium-Legierungsschmelze, deren Gehalt an Silizium durch Zugabe von SiliziumPulver auf den gewünschten Gewichtsanteil an Silizium eingestellt werden kann, durch Zerstäuben bei hohen Abkühlgeschwindigkeiten von 10³ bis 10⁷ K/s ein solches Lotpulver erhalten. Hierzu wird die Aluminium-Silizium-Legierung-Schmelze einer Düse zugeführt und mit Hilfe eines inerten Prozessgases der Schmelzestrahl verdüst. Die hierbei entstehenden Metallschmelzetröpfchen werden durch das Prozessgas bis zur Erstarrung abgekühlt. Durch das schnelle Abschrecken der Schmelzetröpfchen wird der in der Schmelze vorliegende Zustand quasi eingefroren. Die erzielten Pulverpartikel weisen im Gefüge keine groben Phasen auf. Die Struktur ist homogen und feindispers. Die Silizium-Primär-Ausscheidungen sind homogen in jedem Pulverpartikel verteilt. Es entsteht eine ultrafeine Mikrostruktur. Ein anderes Verfahren zur Herstellung schnell erstarrter Pulverpartikel ist die sogenannte Melt-Spinning-Technologie.

In vorteilhafter Weise kann auch Overspray von Prozessen der schnellen Erstarrung, wie beispielsweise von Melt-Spinning-Prozessen oder von Sprühkompaktier-Verfahren, die bei der Herstellung anderer Produkte anfallen, als Lotpulver eingesetzt werden. Um ein solches Overspray als Lotpulver einsetzen zu können, sollte das Pulver jedoch weniger als 0,1 Gew% Kupfer, weniger als 0,3 Gew% Eisen und weniger als 5 Gew% Seltene Erden enthalten.

Bei bekannten Hartlotbeschichtungen wird neben dem Lot und Flussmittel zur Erhöhung der Korrosionsbeständigkeit der Aluminiumbauteile auch eine Zinkbeschichtung vorgesehen. Ein Zink-Anteil kann auch bei Verwendung eines erfindungsgemäßen Lotpulvers zur Beschichtung eines Aluminiumbauteils vorgesehen werden, wobei der Zink-Anteil zum einen als Bestandteil des Flussmittels, wie beispielsweise Kaliumfluorzinkat, vorgesehen werden kann oder das Zink ist ein Lotpulverbestandteil. In diesem Fall werden bis 12 Gew% Zink, vorzugsweise bis 10 Gew% Zink, der Aluminium-Silizium-Legierungsschmelze zugeführt, bevor der Prozess der schnellen Erstarrung beginnt. Im erhaltenen Lotpulver ist das Zink dann vorzugsweise gelöst enthalten.

In gleicher Weise können weitere Legierungsbestandteile als Einzelelemente oder als Vorlegierungen der Aluminium-Silizium-Legierungsschmelze vor dem Erstarrungsprozess zugegeben werden, wie beispielsweise für Hydridbildner, die beim Erstarrungsprozess vorhandenen Wasserstoff binden. Hierfür kommen Erdalkalimetalle oder Übergangsmetalle, wie beispielsweise Kalzium, Barium, Zirkon oder Titan in Frage. Des Weiteren können der Aluminium-Silizium-Legierung Komponenten zugefügt werden, die zur Kornverfeinerung beitragen, wie beispielsweise Natrium, Strontium, Phosphor, Germanium, Indium, Wismut, Antimon oder Beryllium. Beryllium wird des Weiteren auch als Magnesium-Blocker eingesetzt, da Magnesium ein Flussmittel negativ beeinflusst. Von diesen Komponenten werden bevorzugt nicht mehr als 0,2 Gew% je Einzelkomponente und nicht mehr als 0,5 Gew% insgesamt vorgesehen.

Ein weiterer Vorteil der Herstellungsmethode für das Lotpulver besteht darin, dass Pulverpartikel einer verhältnismäßig einheitlichen Pulverpartikelgröße erhalten werden können. Zur Anwendung der schnell erstarrten Pulverpartikel als Lotpulver wird die Partikelgröße begrenzt. Die Partikel sollten maximal 80 µm groß sein. Bevorzugt wird eine Partikelgrößenverteilung mit einer mittleren Partikelgröße zwischen 5 und 30 µm, wobei vorzugsweise die mittlere Partikelgröße zwischen 10 und 20 µm liegt. Um eine solche Partikelgrößenverteilung zu erhalten, sind die Pulverpartikel ggf. nach der schnellen Erstarrung ein oder mehreren Sieb- und/ oder Sichtvorgängen zuzuführen.

Ein solches erfindungsgemäßes Lotpulver wird insbesondere zur Beschichtung von Wärmetauscher-Bauteilen verwendet, vorzugsweise zur Beschichtung der stranggepressten Flachrohrprofile des Wärmetauschers, so dass diese mittels einer Hartlotverbindung mit den Sammlerprofilen und den zwischen den Flachrohrprofilen angeordneten Lamellen verbunden werden können. Die Flachrohrprofile sind vorzugsweise stranggepresste Hohlprofile. Für die Anwendung als Wärmetauscher werden Multikammerhohlprofile (MP-Profile) oder besonders bevorzugt Mikromulti-Kammerhohlprofile (MMP-Profile) eingesetzt. Die Beschichtung der stranggepressten Flachrohrprofile kann unmittelbar nach dem Strangpressprozess erfolgen, d.h. inline mit dem Strangpressverfahren. Vorteilhaft ist es, wenn die zum Hartlöten notwendige Beschichtung auf den noch warmen stranggepressten Flachrohrprofilstrang aufgebracht wird. Eine Beschichtung kann jedoch auch in einem separaten Prozessschritt erfolgen.

Zusammen mit dem Lotpulver wird bei der Beschichtung der AluminiumBauteile, insbesondere der stranggepressten Flachrohrprofile eines Wärmetauschers, vorzugsweise gleichzeitig ein Flussmittel aufgetragen. Es kommen verschiedene Flussmittel in Frage. Die Auswahl erfolgt nach dem gewünschten Lötprozess. Für eine Ofenlötung unter Schutzgasatmosphäre wird beispielsweise ein bekanntes Nocolok-Flussmittel eingesetzt, nämlich ein Kaliumfluoraluminat ggf. mit Zusätzen an Zink, d.h. ein Kaliumfluorzinkat. Neuere Nocolok-Flussmittel enthalten zusätzlich Lithiumfluoraluminat. Das Gemisch aus Lotpulver und Flussmittel kann darüber hinaus auch Anteile an Cäsiumfluormetallaten enthalten. Diese Flussmittelanteile sind insbesondere vorteilhaft, wenn der Grundwerkstoff des Flachrohrprofils eine Aluminiumlegierung mit einem Magnesiumsanteil ist. Die Anteile an Cäsiumfluormetallat im Flussmittel führen dann zu einer Schmelzpunktreduzierung, was das Flussmittel besser verträglich gegenüber solchen Aluminium-Legierungen macht. Das erfindungsgemäße Lotpulver und das Flussmittel können als trockenes Lot-Flussmittel-Gemisch auf die Flachrohrprofile aufgebracht werden, wobei das Flussmittel vorzugsweise eine Mischung aus Kaliumfluormetallat sowie einem Zusatz von 1 Gew% bis 10 Gew% Lithiumfluormetallat ist oder wobei das Flussmittel zusätzlich Cäsiumfluormetallat enthält, vorzugsweise 1 Gew% bis 40 Gew% Cäsiumfluormetallat bezogen auf die Menge an Flussmittel. Eine trockene Aufbringung (Dry-Fluxing) hat den Vorteil gegenüber einer als Paste und wässerige Suspension hergestellten Lot-Flussmittel-Mischung, d.h. gegenüber einer Nassbeschichtung, dass ein nachfolgendes Trocknen der Bauteile entfällt. Darüber hinaus hat eine Nassbeschichtung den Nachteil, dass die im Kreislauf geführten Aufschlämmungen Verunreinigungen aufnehmen können. Bei einem Dry-Fluxing-Verfahren wird das trockene Pulvergemisch, beispielsweise elektrostatisch oder mittels Plasmabeschichtung, auf die Bauteile aufgebracht und zwar weniger als 20 g/qm Pulverpartikel bezogen auf die Oberfläche der Fachrohrprofile, bevorzugt 10 bis 20 g/qm. Der Anteil an Flussmitteln auf der Oberfläche der Flachrohrprofile soll dabei 2 bis 15 g/qm, vorzugsweise 3 bis 7 g/qm betragen.

Für eine bessere Haftung der Lotpulverpartikel und Flussmittelpulverpartikel kann die Beschichtungsmischung für die Flachrohrprofile in bekannter Weise auch ein Binderpulver enthalten. Eine trockene Mischung zur Beschichtung von Wärmetauscher-Bauteilen aus Aluminium oder Aluminiumlegierungen für die Hartverlötung enthält in einer bevorzugten Ausführungsform das erfindungsgemäße Lotpulver zusammen mit einem Flussmittelpulver und einem Binderpulver, wobei in der Mischung vorzugsweise 20 bis 40 Gew% Lotpulver, 25 bis 60 Gew% Flussmittelpulver und 4 bis 20 Gew% Binderpulver enthalten sind. Als Binderpulverpartikel werden Pulverpartikel von Ethylcellulosen, Polyurethanen, Polyacrylaten, Poly(meth)acrylaten, Polyaminen, Polyvinylalkoholen und Verdickern wie Gelatine, Polyethylenglykolen oder Pinienharzen eingesetzt, vorzugsweise weniger als 20 Gew.

Bei einer nassen Beschichtung der Flachrohrprofile wird diese Mischung aus Lotpulver, Flussmittelpulver und Binderpulver gleichmäßig in einem Lösungsmittel dispergiert. Diese Aufschlämmung wird auf die Oberfläche der Flachrohrprofile aufgesprüht oder mittels Walzen auf die Flachrohrprofile aufgebracht.

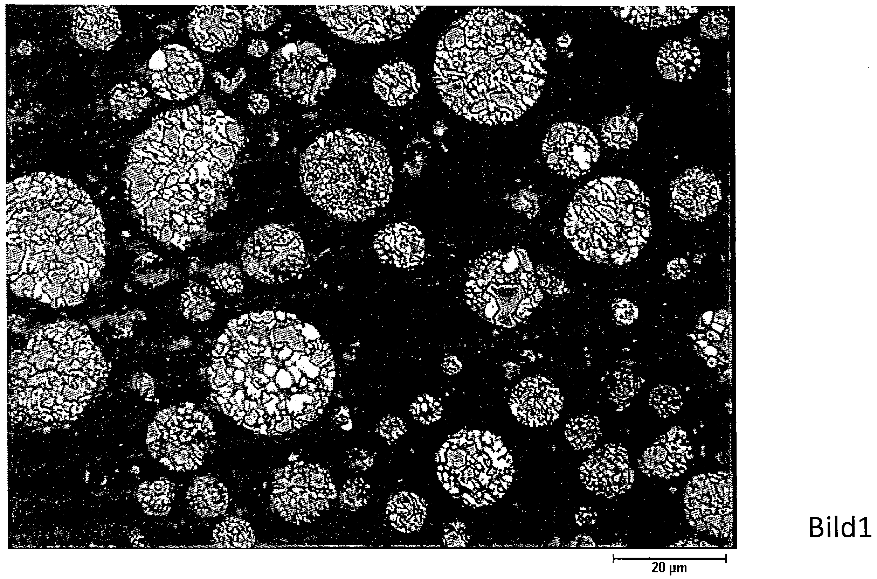

Nachfolgend wird die Erfindung anhand eines Ausführungsbeispiels beschrieben. Das Lotpulver enthält Pulverpartikel, die durch eine schnelle Erstarrung aus einer AlSi(34)-Legierungsschmelze erhalten wurden. Das Bild 1 zeigt eine vergrößerte Darstellung des AlSi(34)-Legierungsgefüge nach der Erstarrung. Die Si-Ausscheidungen haben eine Größe von 0,8 bis 6,4 µm. Die Silizium-Primärkristallausscheidungen heben sich dunkelgrau von dem hellen eutektischen Aluminium-Silizium-Legierungsgefüge ab. Sichtbar ist, dass in jedem Pulverpartikel gleichmäßig verteilt Silizium-Primärkristallausscheidungen vorliegen.

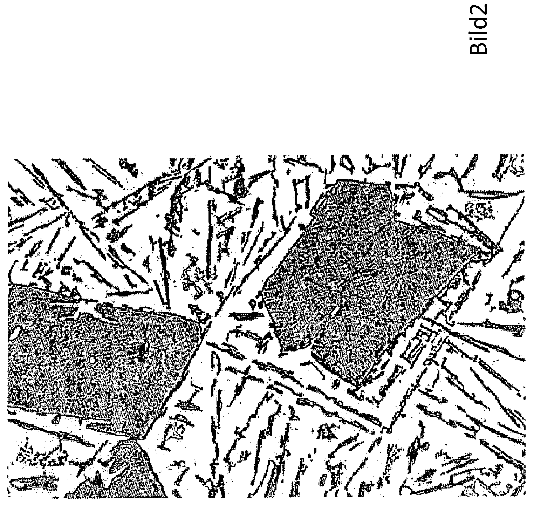

Bild 2 zeigt zum Vergleich eine auf klassischem Wege hergestellte übereutektische AlSi18-Legierung. Dieses AlSi18-Pulver zeigt keine vergleichbar gute Verteilung der Silizium-Primärkristalle. Dieses Bild ist dem Aluminium-Taschenbuch, 15. Auflage, Seite 77, Bild 3.4c entnommen.

Das in Bild 1 gezeigte Lotpulver wurde mit der doppelten Menge eines Flussmittelpulvers gemischt, wobei das Flussmittelpulver 90% Kaliumfluoraluminat und 10% Lithiumfluoraluminat enthält. Diese Pulverbestandteile werden in einem trockenen Plasmaauftragungsverfahren auf die Oberfläche eines Flachrohrprofils aufgebracht und zwar in einer Menge von 12 g/qm. Die so vorbereiteten Aluminium-Flachrohrprofile werden unter Schutzgasatmosphäre in einem Ofen bei gleichmäßiger Temperatur verlötet. Dieser Versuch wurde mehrfach wiederholt. Es traten keine Löterosionen auf.

## Patentansprüche

1. Lotpulver zum Verbinden von Bauteile aus Aluminium oder Aluminiumlegierungen durch Hartlöten
aus Pulverpartikeln auf Aluminium-Silizium-Basis mit einem Gewichtsanteil von mehr als 12 Gew% Silizium,
**dadurch gekennzeichnet, dass**
die Pulverpartikel
- durch eine schnelle Erstarrung einer Schmelze auf Aluminium-Silizium-Basis, nämlich durch Zerstäuben bei hohen Abkühlgeschwindigkeiten von 10³ bis 10⁷ K/s, erzeugt sind,
- eine maximale Partikelgröße von 80 µm haben,
- gleichmäßig verteilte Silizium-Primärkristallausscheidungen in dem eutektischen Aluminium-Silizium-Legierungsgefüge enthalten sowie
- im Gefüge keine groben Phasen aufweisen.

2. Lotpulver nach Anspruch 1, **dadurch gekennzeichnet, dass** die Partikelgrößenverteilung Partikel mit einer Partikelgröße von 5 bis 30 µm zeigt, wobei vorzugsweise die mittlere Partikelgröße zwischen 10 und 20 µm liegt.

3. Lotpulver nach Anspruch 1 oder 2, **dadurch gekennzeichnet, dass** die gewünschte Partikelgrößenverteilung gegebenenfalls durch anschließende Siebvorgänge erhalten wurde.

4. Lotpulver nach einem der Ansprüche 1 bis 3, **dadurch gekennzeichnet, dass** die Pulverpartikel auf Aluminium-Silizium-Basis mehr als 12 bis 40 Gew% Silizium, vorzugsweise 18 bis 36 Gew% Silizium, enthalten.

5. Lotpulver nach einem der Ansprüche 1 bis 4, **dadurch gekennzeichnet, dass** die Pulverpartikel auf Aluminium-Silizium-Basis bis 12 Gew% Zink, vorzugsweise bis 10 Gew% Zink, enthalten.

6. Lotpulver nach einem der Ansprüche 1 bis 5, **dadurch gekennzeichnet, dass** die Pulverpartikel auf Aluminium-Silizium-Basis
mehr als 12 bis 40 Gew% Silizium,
maximal 12 Gew% Zink,
maximal 0,1 Gew% Kupfer,
maximal 0,3 Gew% Eisen,
maximal 5 Gew% Seltene Erden,
maximal 0,2 Gew% einer oder mehrerer weiterer Legierungskomponenten einzeln bzw.
maximal 0,5 Gew% einer oder mehrerer weiterer Legierungskomponenten insgesamt,
Rest Aluminium enthalten.

7. Wärmetauscher aus Bauteilen aus Aluminium oder einer Aluminiumlegierung, nämlich aus stranggepressten Flachrohrprofilen, aus Lamellen, welche zwischen den Flachrohrprofilen angeordnet sind und aus Sammlerprofilen, in welche die Flachrohrprofile endseitig eingeführt sind, **dadurch gekennzeichnet, dass** die Flachrohrprofile mit einem Lotpulver nach einem der Ansprüche 1 bis 6 beschichtet sind.

8. Wärmetauscher nach Anspruch 7, **dadurch gekennzeichnet, dass** die Flachrohrprofile mit einem Gemisch aus dem Lotpulver und einem Flussmittelpulver beschichtet sind, wobei das Flussmittel eine Mischung aus Kaliumfluormetallat sowie einem Zusatz von 1 Gew% bis 10 Gew% Lithiumfluormetallat ist.

9. Wärmetauscher nach Anspruch 8, **dadurch gekennzeichnet, dass** die Flachrohrprofile mit einem Gemisch aus dem Lotpulver und einem Flussmittel beschichtet sind, wobei das Flussmittel zusätzlich Cäsiumfluormetallat enthält, vorzugsweise 1 Gew% bis 40 Gew% Cäsiumfluormetallat bezogen auf die Menge an Flussmittel.

10. Wärmetauscher nach Anspruch 8 oder 9, **dadurch gekennzeichnet, dass** auf der Oberfläche der Flachrohrprofile weniger als 20 g/qm des Gemischs aus dem Lotpulver und dem Flussmittel aufgebracht sind, vorzugsweise 10 bis 20 g/qm.

11. Wärmetauscher nach einem der Ansprüche 7 bis 10, **dadurch gekennzeichnet, dass** Zink im Gemisch aus dem Lotpulver und dem Flussmittel als Lotpulverbestandteil und/oder als Kaliumfluorzinkat enthalten ist.

12. Wärmetauscher nach einem der Ansprüche 7 bis 11, **dadurch gekennzeichnet, dass** die Flachrohrprofile mit einer Mischung aus dem Lotpulver gemäß einem der Ansprüche 1 bis 6 und einem Flussmittelpulver und zusätzlich mit 4 Gew% bis 20 Gew% eines Binderpulver beschichtet sind.

13. Wärmetauscher nach einem der Ansprüche 7 bis 12, **dadurch gekennzeichnet, dass** die trockenen Pulverpartikel durch elektrostatische Beschichtung oder Plasmabeschichtung auf die Flachrohrprofile aufgebracht sind.

14. Wärmetauscher nach einem der Ansprüche 7 bis 12, **dadurch gekennzeichnet, dass** die Pulverpartikel als nasse Aufschlämmung durch Aufsprühen oder Walzbeschichtung auf die Flachrohrprofile aufgebracht sind.

15. Wärmetauscher nach einem der Ansprüche 7 bis 14, **dadurch gekennzeichnet, dass** die Flachrohrprofile stranggepresste Hohlprofile, vorzugsweise Multikammerhohlprofile (MP-Profile), besonders bevorzugt Micro-Multikammerhohlprofile (MMP-Profile), sind.

16. Trockene Mischung zur Beschichtung von Wärmetauscher-Komponenten aus Aluminium oder Aluminiumlegierungen für die Hartverlötung enthaltend eine Mischung aus Lotpulver gemäß einem der Ansprüche 1 bis 6, aus einem Flussmittelpulver und gegebenenfalls einem Binderpulver, wobei in der Mischung vorzugsweise 20 bis 40 Gew% Lotpulver, 25 bis 60 Gew% Flussmittelpulver und bis 20 Gew% Binderpulver enthalten sind.

## Claims

1. Solder powder to join components made from aluminium or aluminium alloys using brazing
from powder particles of aluminium-silicon base with a weight ratio of more than 12 wght% Silicon,
**characterized in that**
the powder particles
- are generated by rapid solidification of a molten mass on an aluminium-Silicon base, namely by atomizing at high cooling down speeds of 10³ to 10⁷ K/s,
- have a maximum particle size of 80 pm,
- uniformly distributed silicon-primary crystal separations in which eutectic aluminium-silicon alloy structure is included, as well as
- no coarse phases are featured in the structure.

2. Solder powder in accordance with claim 1, **characterized in that** the powder particle distribution is indicated with a particle size of 5 to 30 pm, whereby, preferably the mean particle size is between 10 and 20 pm.

3. Solder powder in accordance with claim 1 or 2, **characterized in that** the desired size of particle distribution has, if necessary, been sustained through subsequent screening processes.

4. Solder powder in accordance with one of the claims 1 to 3, **characterized in that** the powder particle on aluminium-silicon base contains more than 12 to 40 wght% silicon, preferably 18 to 36 wght% silicon.

5. Solder powder in accordance with one of the claims 1 to 4, **characterized in that** the powder particle on aluminium-silicon base contains up to 12 wght% zinc, preferably up to 10 wght% zinc.

6. Solder powder in accordance with one of the claims 1 to 5, **characterized in that** the powder particle is an aluminium-silicon base more than 12 to 40 wght% silicon,
maximum 12 wght% zinc,
maximum 0.1 wght% copper,
maximum 0.3 wght% iron,
maximum 5 wght% rare earths,
maximum 0.2 wght% one or more other alloying components individual or
maximum 0.5 wght% one or more other alloying components overall, Remaining aluminium included.

7. Heat exchanger made from components made from aluminium or an aluminium alloy, namely made from extrusion-moulded flat tube sections, of lamellae, which are arranged between the flat tube sections and made from collective sections, in which the flat tube sections are inserted at the end, **characterized in that** the flat tube sections are coated with a solder powder in accordance with one of the claims 1 to 6.

8. Heat exchanger in accordance with claim 7, **characterized in that** the flat tube sections are coated with a mixture of the solder powder and a flux powder, whereby, the flux is a mixture of metallated potassium fluoride and an additive of 1 wght% to 10 wght% of metallated lithium fluoride.

9. Heat exchanger in accordance with claim 8, **characterized in that** the flat tube sections are coated with a mixture of the solder powder and a flux, whereby, the flux also contains metallated cesium fluoride, preferably 1 wght% to 40 wght% metallated cesium fluoride, related to the quantity of flux.

10. Heat exchanger in accordance with claim 8 or 9, **characterized in that** less than 20 g/qm of the mixture of solder powder and flux is applied to the surface of the flat tube sections, preferably 10 to 20 g/qm.

11. Heat exchanger in accordance with one of the claims 7 to 10, **characterized in that** zinc is in the mixture of solder powder and the flux as a part of the solder powder and/or included as zincated potassium fluoride.

12. Heat exchanger in accordance with one of the claims 7 to 11, **characterized in that** the flat tube sections coated with a mixture of the of the solder powder in accordance with one of the claims 1 to 6 and a flux powder and, in addition, with 4 wght% to 20 wght% of a binding powder.

13. Heat exchanger in accordance with one of the claims 7 to 12, **characterized in that** the dried powder particles are applied to the flat tube sections using electrostatic coating or plasma coating.

14. Heat exchanger in accordance with one of the claims 7 to 12, **characterized in that** the powder particles are applied to the flat tube sections as a wet slurry by spraying or roller coating.

15. Heat exchanger in accordance with one of the claims 7 to 14, **characterized in that** the hollow section of the extrusion-moulded flat tube sections are preferably multi-chamber hollow sections (MP sections), particularly preferred as micro multi-chamber hollow sections (MMP sections).

16. Dry mixture for coating heat exchanger components made from aluminium or aluminium alloys for brazing, containing a mixture of solder powder in accordance with one of the claims 1 to 6, from a flux powder and, if necessary, a binding powder,
whereby, the mixture preferably contains 20 to 40 wght% of solder powder, 25 to 60 wght% of flux powder and up to 20 wght% binding powder.

## Revendications

1. Poudre de soudure pour relier des composants en aluminium ou des alliages à l'aluminium par brasage fort,
composée de particules pulvérulentes à base d'aluminium et de silicium, avec une part de silicium supérieure à 12 % pondéraux,
**caractérisée en ce que**
les particules pulvérulentes
- sont obtenues par solidification rapide d'un bain à base d'aluminium-silicium, à savoir par atomisation à des vitesses de refroidissement élevées comprises entre 10³ et 10⁷ K/s,
- ont une taille maximale de 80 µm,
- contiennent, uniformément réparties dans la structure de l'alliage eutectique d'aluminium et de silicium, des précipitations de cristaux de silicium primaires et
- qu'elles ne présentent aucune phase grossière dans la structure.

2. Poudre de soudure selon la revendication 1, **caractérisée en ce que** la distribution granulométrique des particules est comprise entre 5 et 30 µm, sachant que la granulométrie moyenne des particules est comprise de préférence entre 10 et 20 µm.

3. Poudre de soudure selon la revendication 1 ou 2, **caractérisée en ce que** la distribution granulométrique souhaitée des particules a été préservée, le cas échéant, par des opérations de tamisage subséquentes.

4. Poudre de soudure selon l'une des revendications 1 à 3, **caractérisée en ce que** les particules de poudre à base d'aluminium et de silicium contiennent plus de 12 à 40 % pondéraux de silicium, de préférence entre 18 et 36 % pondéraux de silicium.

5. Poudre de soudure selon l'une des revendications 1 à 4, **caractérisée en ce que** les particules de poudre à base d'aluminium et de silicium contiennent jusqu'à 12 % pondéraux de zinc, de préférence jusqu'à 10 % pondéraux de zinc.

6. Poudre de soudure selon l'une des revendications 1 à 5, **caractérisée en ce que** les particules de poudre à base d'aluminium et de silicium contiennent entre plus de 12 et 40 % pondéraux de silicium,
au maximum 12 % pondéraux de zinc,
au maximum 0,1 % pondéral de cuivre,
au maximum 0,3 % pondéral de fer,
au maximum 5 % pondéraux de terres rares,
au maximum 0,2 % pondéral d'un ou plusieurs autres constituants individuels de l'alliage et/ou
au maximum 0,5 % pondéral d'un ou plusieurs autres constituants totaux de l'alliage,
et que le reste est de l'aluminium.

7. Échangeur thermique constitué de composants en aluminium ou en alliage d'aluminium, à savoir de tubes profilés plats extrudés à la presse, de lamelles qui sont agencées entre les tubes profilés plats, et de profilés collecteurs dans lesquels les tubes profilés plats sont introduits par leur extrémité, **caractérisé en ce que** les tubes profilés plats sont revêtus d'une poudre de soudure selon l'une des revendications 1 à 6.

8. Échangeur thermique selon la revendication 7, **caractérisé en ce que** les tubes profilés plats sont revêtus d'un mélange composé de la poudre de soudure et d'un fluxant en poudre, sachant que le fluxant est un mélange de métalate de fluoropotassium et d'un additif composé de 1 à 10 % pondéraux de métalate de fluorolithium.

9. Échangeur thermique selon la revendication 8, **caractérisé en ce que** les tubes profilés plats sont revêtus d'un mélange composé de la poudre de soudure et d'un fluxant, sachant que le fluxant contient en plus un métalate de fluorocésium, de préférence entre 1 et 40 % pondéraux de métalate de fluorocésium référés à la quantité de fluxant.

10. Échangeur thermique selon la revendication 8 ou 9, **caractérisé en ce que** sur la surface des tubes profilés plats sont appliqué moins de 20 g/m² d'un mélange composé de la poudre de soudure et du fluxant, de préférence entre 10 et 20 g/m².

11. Échangeur thermique selon l'une des revendications 7 à 10, **caractérisé en ce que** le zinc est présent, dans le mélange formé de la poudre de soudure et du fluxant, sous forme de constituant de la poudre de soudure et/ou sous forme de zincate de fluoropotassium.

12. Échangeur thermique selon l'une des revendications 7 à 11, **caractérisé en ce que** les tubes profilés plats sont revêtus d'un mélange composé de la poudre de soudure selon l'une des revendications 1 à 6 et d'un fluxant en poudre et, en plus, de 4 à 20 % pondéraux d'un liant en poudre.

13. Échangeur thermique selon l'une des revendications 7 à 12, **caractérisé en ce que** les particules pulvérulentes sèches sont appliquées sur les tubes profilés plats sous la forme d'un revêtement électrostatique ou d'un revêtement plasma.

14. Échangeur thermique selon l'une des revendications 7 à 12, **caractérisé en ce que** les particules pulvérulentes sous forme de boues mouillées sont appliquées sur les tubes profilés plats par pulvérisation dessus ou par enduction au rouleau.

15. Échangeur thermique selon l'une des revendications 7 à 14, **caractérisé en ce que** les tubes profilés plats sont des profilés creux extrudés à la presse, de préférence des profilés creux multichambres (profilés MP), en particulier des micro-profilés creux multichambres (profilés MMP).

16. Mélange sec pour revêtir des composants d'échangeur thermique en aluminium ou en alliages d'aluminium pour le brasage fort, contenant un mélange de poudre de soudure selon l'une des revendications 1 à 6, un fluxant en poudre et le cas échéant un liant en poudre,
sachant que le mélange contient de préférence 20 à 40 % pondéraux de poudre de soudure, 25 à 60 % pondéraux de fluxant en poudre et jusqu'à 20 % pondéraux de liant en poudre.
